# EUROPEAN PATENT APPLICATION

(11) **EP 1 650 239 A1**
(43) Date of publication of application: **26.04.2006**
(21) Application number: 04770899.5
(22) Date of filing: 23.07.2004
(51) Int. Cl.: C08G 18/48, C08G 18/42, C08G 18/44

(54) **POLYURETHANE RESINS AND PROCESS FOR PRODUCTION THEREOF**

(30) Priority: 24.07.2003 JP 2003279139
(71) Applicant: ASAHI GLASS COMPANY LTD., Tokyo 100-8405 (JP)
(72) Inventor: HAMASAKI, Kota, c/o Asahi Glass Urethane Co., Ltd, Kashima-gun, Ibaraki 314-0195 (JP); TSUGE, Yukio, c/o Asahi Glass Urethane Co., Ltd., Kashima-gun, Ibaraki 314-0195 (JP)
(74) Representative: Hartz, Nikolai
(86) International application number: PCT/JP2004/010506
(87) International publication number: WO 2005/010068

(57) **Abstract**

To provide a process for producing a polyurethane resin providing a film soft at a low temperature and excellent in heat resistance and water resistance.

A process for producing a polyurethane resin **characterized by** reacting at least one polyol (A) selected from the group consisting of polycarbonate polyol, polyester polyol and polyoxytetramethylene polyol, a polyoxyalkylene polyol (B) having a total oxyethylene group content of from 30 to 80 mass%, which has from 10 to 50 mass% of oxyethylene groups (inside oxyethylene groups) in the inside of its molecule and from 10 to 50 mass% of oxyethylene block chains (terminal oxyethylene chains) at the terminals of its molecule, and a polyisocyanate (C).

## Description

### TECHNICAL FIELD

The present invention relates to a polyurethane resin capable of forming a film-form polyurethane resin (hereinafter referred to as "polyurethane resin film") usable for an application to synthetic leathers, and a process for producing the same.

### BACKGROUND ART

Heretofore, wet type process and dry type process have been known as a process for producing a film-form polyurethane resin usable of an application to synthetic leathers. According to the wet type process, a polyurethane resin film laminated on a substrate is produced by coating a water-miscible organic solvent solution of polyurethane resin on a substrate to have a solution impregnated therein, dipping the substrate in a coagulating solution such as water to coagulate the polyurethane resin on the substrate, washing the substrate with water to remove the solvent and drying. Also, according to the dry type process, a polyurethane resin film laminated on a substrate is produced by coating a volatile organic solvent solution of polyurethane resin on a substrate to have the solution impregnated therein and then volatilizing the solvent to coagulate the polyurethane resin on the substrate.

Also, as a polyurethane resin capable of forming such a film, a polyurethane resin obtained by reacting polyester polyol, polyoxytetramethylene polyol or polyoxypropylene polyol with polyisocyanate has been used.
Patent Document 1: JP-A-8-253547
Patent Document 2: JP-A-2000-103831
Patent Document 3: JP-A-9-3183

### DISCLOSURE OF THE INVENTION

### PROBLEMS THAT THE INVENTION IS TO SOLVE

When producing a polyurethane resin film by using polyester polyol, it was able to produce a film having a sufficient film thickness, but it had a problem of being poor in water resistance, durability and hand feeling and was unsuitable as a synthetic leather, particularly for clothes. A polyurethane resin film produced by using polyoxytetramethylene polyol was relatively good in respect of water resistance and durability but poor in respect of elastic recovery and elongation property at a low temperature, and was also unsuitable as a synthetic leather for clothes.

On the other hand, polyoxypropylene polyol has a low viscosity and can be easily handled as compared with polyoxytetramethylene polyol which is solid at normal temperature, and a polyurethane resin film produced by using this material was excellent in water resistance and flexibility but poor in strength and had defects that tacks tended to remain on the resin surface and that heat resistance and water resistance were poor.

In order to solve the above problems, a process for producing a polyurethane resin providing a film excellent in low temperature properties and having high heat resistance and water resistance, has been demanded.

### MEANS OF SOLVING THE PROBLEMS

The present invention is to solve the above problems, and provides the following inventions relating to a polyurethane resin and a process for producing the polyurethane resin providing a film-form polyurethane resin suitable for synthetic leathers.

A process for producing a polyurethane resin characterized by reacting at least one polyol (A) selected from the group consisting of polycarbonate polyol, polyester polyol and polyoxytetramethylene polyol, a polyoxyalkylene polyol (B) having a total oxyethylene group content of from 30 to 80 mass%, which has from 10 to 50 mass% of oxyethylene groups (inside oxyethylene groups) in the inside of its molecule and from 10 to 50 mass% of oxyethylene block chains (terminal oxyethylene chains) at the terminals of its molecule, and a polyisocyanate (C).

A process for producing a film-form polyurethane resin characterized by reacting, in an inert organic solvent, at least one polyol (A) selected from the group consisting of polycarbonate polyol, polyester polyol and polyoxytetramethylene polyol, a polyoxyalkylene polyol (B) having a total oxyethylene group-content of from 30 to 80 mass%, which has from 10 to 50 mass% of oxyethylene groups (inside oxyethylene groups) in the inside of its molecule and from 10 to 50 mass% of oxyethylene block chains (terminal oxyethylene chains) at the terminals of its molecule, and a polyisocyanate (C), to obtain a solution of a polyurethane resin, then coating the obtained solution of the polyurethane resin on a substrate, and then, removing the solvent.

A polyurethane resin obtained by reacting at least one polyol (A) selected from the group consisting of polycarbonate polyol, polyester polyol and polyoxytetramethylene polyol, a polyoxyalkylene polyol (B) having a total oxyethylene group content of from 30 to 80 mass%, which has from 10 to 50 mass% of oxyethylene groups (inside oxyethylene groups) in the inside of its molecule and from 10 to 50 mass% of oxyethylene block chains (terminal oxyethylene chains) at the terminals of its molecule, and a polyisocyanate (C).

### EFFECT OF THE INVENTION

According to the production process of the present invention, a film-form polyurethane resin having excellent heat resistance and water resistance and also having physical properties of a low glass transition point, a small modulus and soft feeling at a low temperature, can be obtained. Therefore, a synthetic leather having a satisfactory hand feeling, particularly suitable as a synthetic leather for clothes, can be obtained. Further, particularly when producing a film-form polyurethane resin by wet type process, an effect of producing a film-form polyurethane resin having a satisfactory film thickness can be achieved.

### BEST MODE FOR CARRYING OUT THE INVENTION

### POLYOL (A)

In the present invention, at least one polyol (A) selected from the group consisting of polycarbonate polyol, polyester polyol and polyoxytetramethylene polyol is used.

A preferable example of the polycarbonate polyol includes polycarbonate diol obtained by de-alcohol condensation reaction of low molecular diols with dialkyl carbonate, de-phenol condensation reaction of low molecular diols with diphenyl carbonates, or de-glycol condensation reaction of low molecular diols with alkylene carbonates or dialkyl carbonates.

Examples of the low molecular diols include 1,4-butanediol, 1,6-hexanediol, ethylene glycol, propylene glycol, 3-methyl-1,5-pentanediol, neopentyl glycol, diethylene glycol, 1,4-cyclohexanediol, 1,4-cyclohexanedimethanol and the like. Examples of the dialkyl carbonate include dimethyl carbonate and diethyl carbonate. Examples of dialkylene carbonates include ethylene carbonate. A particularly preferable example of the polycarbonate polyol includes poly(hexamethylene carbonate)diol obtained by condensation reaction of 1,6-hexanediol with diethyl carbonate.

The polycarbonate polyol has preferably a number average molecular weight of from 500 to 4,000, particularly preferably from 1,000 to 2,000.

A preferable example of the polyester polyol includes a polyester diol, examples of which include a condensed polyester diol obtained by reacting low molecular diols or polyoxyalkylene diol with dicarboxylic acids or their derivatives and a lactone diol obtained by ring-opening addition polymerization of lactone in the presence of an initiator such as low molecular diols.

As the low molecular diols, the above illustrated one or two or more kinds of low molecular diols are usable. Also, examples of the dicarboxylic acid or its derivative include succinic acid, adipic acid, azelaic acid, sebacic acid, phthalic acid, isophthalic acid, terephthalic acid, phthalic anhydride, tetrahydrophthalic anhydride and the like. Examples of the lactone include valerolactone, methylvalerolactone, ε-caprolactone, trimethylcaprolactone and the like.

The polyester polyol has preferably a number average molecular weight of from 500 to 4,000, particularly preferably from 1,000 to 2,000.

A preferable example of the polyoxytetramethylene polyol includes polyoxytetramethylene diol. It has preferably a number average molecular weight of from 500 to 4,000, particularly preferably from 800 to 2,500.

Preferable examples of the polyol (A) include polycarbonate polyol or polyester polyol. The polycarbonate polyol is more preferable, and poly(hexamethylene carbonate)diol is particularly preferable among them.

### POLYOL (B)

In the present invention, a polyoxyalkylene polyol (B) having a total oxyethylene group content of from 30 to 80 mass%, which has from 10 to 50 mass% of oxyethylene groups (inside oxyethylene groups) in the inside of its molecule and from 10 to 50 mass% of oxyethylene block chains (terminal oxyethylene chains) at terminals of its molecule, is used.

The polyoxyalkylene polyol (B) is obtained by reacting ethylene oxide and other alkylene oxide in the presence of a polyvalent initiator and a catalyst.

The polyvalent initiator is a compound having at least 2 active hydrogen atoms reactive with an alkylene oxide, examples of which include a polyhydric alcohol, a polyhydric phenol, a polyamine, an alkanolamine and the like. Divalent to hexavalent initiators are preferable, divalent to trivalent initiators are more preferable, and a divalent initiator is most preferable. Examples of the divalent initiator include ethylene glycol, diethylene glycol, propylene glycol, dipropylene glycol, neopentyl glycol, 1,4-butanediol, 1,6-hexanediol, bisphenol A or a relatively low molecular weight polyoxyalkylene diol obtainable by ring-opening addition polymerization of a small amount of alkylene oxide with them. They may be used respectively alone or may be used in a combination of two or more kinds. A hydroxyl group number of the polyoxyalkylene polyol (B) is the same as the number of active hydrogen atoms of an initiator used, and is preferably from 2 to 6, more preferably from 2 to 3, most preferable 2.

Examples of the above catalyst include a general alkali catalyst such as potassium hydroxide or sodium hydroxide, a cesium type alkali catalyst such as cesium hydroxide, a composite metal cyanide complex catalyst, a phosphazene catalyst, and the like.

The polyoxyalkylene polyol (B) has a total unsaturation degree of preferably at most 0.015 meq/g and particularly preferably at most 0.01 meq/g. In order to produce a polyoxyalkylene polyol having such a low total unsaturation degree, it is preferable to use a cesium type alkali catalyst, a composite metal cyanide complex catalyst, a phosphazene catalyst or the like. Their examples include preferably a cesium catalyst such as cesium metal, cesium hydroxide, a cesium alkoxide (cesium methoxide, cesium ethoxide, cesium propoxide or the like), cesium carbonate and the like, and a composite metal cyanide complex catalyst such as zinc hexacyanocobaltate complex catalyst, and a composite metal cyanide complex catalyst is most preferable. However, when using a composite metal cyanide complex catalyst, it is difficult to polymerize ethylene oxide alone, and it is therefore preferable to use other catalyst for forming a terminal oxyethylene chain of polyoxyalkylene polyol (B).

Examples of an alkylene oxide other than ethylene oxide, include preferably a C₃-C₆ alkylene oxide such as propylene oxide, 1,2-butylene oxide, 2,3-butylene oxide or the like. Propylene oxide is particularly preferable.

A particularly preferable example of the inside oxyethylene group in polyoxyalkylene polyol (B) includes an oxyethylene group in a random polymerization chain obtainable by ring-opening addition polymerization of a mixture of ethylene oxide with other alkylene oxide. Further, the inside oxyethylene group content is from 10 to 50 mass%, preferably from 10 to 40 mass%, particularly preferably from 10 to 30 mass%, in the polyoxyalkylene polyol (B).

Also, the polyoxyalkylene polyol (B) is characterized by having a terminal oxyethylene chain. Accordingly, the polyoxyalkylene polyol (B) contains a hydroxyl group having a high reactivity, i.e. primary hydroxyl group, in a high content. Such a polyoxyalkylene polyol is obtainable by carrying out ring-opening addition polymerization of ethylene oxide at the terminal of the polyoxyalkylene polyol. The terminal oxyalkylene chain content is from 10 to 50 mass%, preferably from 15 to 45 mass%, particularly preferably from 15 to 30 mass%, in the polyoxyalkylene polyol (B).

The total oxyalkylene group in the polyoxyalkylene polyol (B) is from 30 to 80 mass%, preferably from 30 to 60 mass%, particularly preferably from 30 to 50 mass%.

The polyoxyalkylene polyol (B) has preferably from 10 to 40 mass% of an inside oxyethylene group and from 15 to 45 mass% of a terminal oxyethylene chain, and the total oxyethylene group content is preferably from 30 to 60 mass%. It is particularly preferable for the polyoxyalkylene polyol (B) to have from 10 to 30 mass% of an inside oxyethylene group, from 15 to 30 mass% of a terminal oxyethylene chain and from 30 to 50 mass% of the total oxyethyelene content.

Further, the polyoxyalkylene polyol (B) is obtainable preferably by subjecting propylene oxide to ring-opening addition polymerization in the presence of a catalyst and an initiator, then subjecting a mixture of propylene oxide and ethylene oxide to ring-opening addition polymerization, and further then subjecting ethylene oxide to ring-opening addition polymerization. Also, it is preferable to obtain by subjecting a mixture of propylene oxide and ethylene oxide to ring-opening addition polymerization in the presence of a catalyst and an initiator, and further subjecting ethylene oxide to ring-opening addition polymerization.

As described above, since a polyoxyalkylene polyol having a low total unsaturation degree is obtainable, it is preferable that an oxyalkylene chain other than a terminal oxyethylene chain in the polyoxyalkylene polyol (B) is obtained by subjecting an alkylene oxide to ring-opening addition polymerization by using a composite metal cyanide complex catalyst.

In the present invention, it is preferable that the polyoxyalkylene polyol (B) is obtained by subjecting propylene oxide to ring-opening addition polymerization in the presence of a composite metal cyanide complex catalyst and an initiator, then subjecting a mixture of propylene oxide and ethylene oxide to ring-opening addition polymerization, and then subjecting ethylene oxide to ring-opening addition polymerization in the presence of an alkali catalyst. Also, it is most preferable to obtain the polyoxyalkylene polyol (B) by subjecting a mixture of propylene oxide and ethylene oxide to ring-opening addition polymerization in the presence of an initiator and then subjecting ethylene oxide to ring-opening addition polymerization in the presence of an alkali catalyst.

The polyoxyalkylene polyol (B) has preferably a hydroxyl value of from 11.2 to 112, more preferably from 20 to 80, further preferably from 20 to 60, and most preferably from 28 to 56.

The polyoxyalkylene polyol (B) may be a mixture of two or more kinds, and even in such a case, average total unsaturation degree and hydroxyl value should be preferably in the above mentioned ranges.

### POLYISOCYANATE

As a polyisocyanate, a diisocyanate having two isocyanate groups is particularly preferable. Examples of the diisocyanate include aromatic, aliphatic or alicyclic diisocyanates.

Their examples include hexamethylene diisocyanate, 1,4-cyclohexane diisocyanate, 4,4'-dicyclohexylmethane diisocyanate, isophorone diisocyanate, xylylene diisocyanate, 1,4-phenylene diisocyanate, 1,3-phenylene diisocyanate, 2,4-tolylene diisocyanate, 2,4/2,6-tolylene diisocyanate mixture, 4,4'-diphenylmethane diisocyanate, isopropylidene-bis(4-phenyl isocyanate), naphthalene diisocyanate, and the like. They may be used respectively alone or in a mixture of two or more.

### CHAIN EXTENDER (D)

In the present invention, a chain extender (D) may be used, together with a polyol (A) and a polyoxyalkylene polyol (B). The chain extender is preferably a compound having at least two active hydrogen-containing groups such as a hydroxyl group or an amino group, and having a molecular weight of preferably less than 500, more preferably at most 300. It is preferable to use a chain extender (D).

Their examples include dihydric alcohols such as ethylene glycol, propylene glycol, 1,4-butanediol, 1,5-pentanediol, 1,6-hexanediol or the like, trihydric alcohols such as trimethylolpropane, glycerin or the like, amino alcohols such as ethanolamine, aminopropyl alcohol, 3-aminocyclohexyl alcohol, p-aminobenzyl alcohol or the like, diamines such as ethylenediamine, 1,2-propylenediamine, 1,4-butylenediamine, 2,3-butylenediamine, hexamethylenediamine, cyclohexanediamine, piperazine, xylylenediamine, tolylenediamine, phenylenediamine, diphenylmethanediamine, 3,3'-dichlorodiphenylmethanediamine or the like, hydrazines such as hydrazine, monoalkylhydrazine, 1,4-dihydrazinodiethylene or the like, and dihydrazides such as carbohydrazide, adipic acids hydrazide or the like. Polyhydric alcohols are preferable, and particularly dihydric alcohols are preferable.

### PRODUCTION PROCESS OF POLYURETHANE RESIN

The present invention relates to a process for producing a polyurethane resin characterized by reacting a polyol (A), a polyoxyalkylene polyol (B) (hereinafter referred to simply as "polyol (B)") and a polyisocyanate (C). Particularly, the present invention relates to a process for producing a film-form polyurethane resin characterized by reacting the above polyol (A), polyol (B) and polyisocyanate (C) in an inert organic solvent to obtain a solution of a polyurethane resin, then coating the obtained solution of the polyurethane resin on a substrate, and then removing the solvent.

Also, a chain extender (D) may be optionally reacted, together with a polyol (A) and a polyol (B). It is preferable to use a chain extender (D).

Examples of a process of reacting a polyol (A), a polyol (B), a polyisocyanate (C) and a chain extender (D) include a process of reacting a polyol (A), a polyol (B), and optional chain extender (D) and a polyisocyanate (C) at the same time, a process of reacting a mixture of a polyol (A) and a polyol (B) with a polyisocyanate (C) and then reacting with a chain extender (D), a process of reacting a polyisocyanate (C) with successively a polyol (A) and a polyol (B), and then reacting with a chain extender (D), and the like.

A polyol (A) and a polyoxyalkylene polyol (B) are used in a mass ratio of preferably from 20/80 to 80/20, more preferably from 40/60 to 60/40.

If the amount of polyol (A) is too small, the polyurethane resin thus obtained is poor in heat resistance and water resistance. Also, when producing a polyurethane resin film by wet type method, a sufficient film thickness can not be obtained. On the other hand, if the amount of polyol (B) is too small, hardness becomes too high and flexibility becomes poor particularly at a low temperature. In the present invention, by using a polyol (A) and a polyol (B) in the above mentioned mixing ratio, a polyurethane resin having satisfactory heat resistance, water resistance, and flexibility at a low temperature, can be obtained, and particularly when producing a polyurethane resin film by wet type method, a polyurethane resin film having a sufficient film thickness can be produced.

Also, when using a chain extender (D), the chain extender (D) is used preferably in an amount of from 0.1 to 10 mols, more preferably from 0.5 to 5 mols, most preferably from 1 to 3 mols, to 1 mol in total of a polyol (A) and a polyol (B).

A reaction rate of a polyisocyanate (C) with an active hydrogen atom compound comprising a chain extender (D), a polyol (A) and a polyol (B) is preferably from 0.8 to 1.2, more preferably from 0.9 to 1.1 at an equivalent ratio of an isocyanate group/an active hydrogen group.

Also, it is preferable to carry out the reaction in an inert organic solvent (an organic solvent unreactive with a starting material of a polyurethane resin such as polyisocyanate). A process for producing a polyurethane resin film includes wet type method and dry type method as described below, but it is preferable in the wet type method to use a water-miscible organic solvent as an organic solvent, and it is preferable in the dry type method to use a highly volatile organic solvent.

However, dimethylformamide (DMF), dimethylacetamide (DMAc), toluene, methyl ethyl ketone, dimethyl sulfoxide, cyclohexanone and the like can be preferably used in both of the wet type method and the dry type method, and DMF and DMAc are particularly preferable. They may be used in a mixture.

It is preferable to carry out the reaction usually at a reaction temperature of from 10 to 150°C, preferably from 20 to 100°C, for from 0.5 to 12 hours. At this time, a catalyst may be used, examples of which include an amine compound such as triethylamine, triethylenediamine or morpholine, and an organic metal compound such as tin octylate or dibutyltin dilaurate. Also, a polymerization-terminator may be used, examples of which include a secondary amine such as diethylamine or dibutylamine.

The present invention relates to a process for producing a film-form polyurethane resin, characterized by carrying out the above reaction in an organic solvent to obtain a polyurethane resin solution, coating the polyurethane resin solution thus obtained on a substrate and then removing the solvent.

Examples of the substrate include a fibrous substrate, a synthetic resin film substrate, a synthetic resin surface, a glass plate, a synthetic resin plate, a paper, a release paper, a metal foil and the like. Examples of the fibrous substrate include a knit cloth, a woven cloth or a non-woven cloth comprising one or mixed fabric of synthetic fibers such as polyester, polyamide or polyacrylonitrile, natural fibers such as cotton or linen, and regenerated fibers such as rayon.

A process for producing a polyurethane resin film includes wet type method and dry type method. The former method is a process comprising coating a polyurethane resin solution composition on a substrate, dipping the substrate in a coagulating solution such as water to have an organic solvent eluted in the coagulating solution, and then drying to obtain a film. The film thus obtained is referred to as a wet type film. The latter method is a process comprising coating a polyurethane resin solution composition on a substrate, and heating and drying the substrate to have a solution volatilized to obtain a coagulated film. The polyurethane film thus obtained is referred to as a dry type film.

The coagulating solution used in the wet type method is preferably water. Also, a small amount of an organic solvent used in the production of polyurethane resin may be mixed with water. Also, in order to improve film-formability, various surfactants may be used. The polyurethane resin film of the present invention is particularly suitable for use in the production of a polyurethane resin film by wet type method.

### SYNTHETIC LEATHER

According to the present invention, it is possible to produce a film-form polyurethane resin suitable as a synthetic leather.

According to the wet type method, it is possible to form a porous polyurethane resin film (wet type film) having fine pores and a sufficient film thickness on a substrate by using a fibrous substrate as a substrate and directly coating and impregnating the above polyurethane resin solution onto the substrate to have the solution coagulated. The laminate thus obtained is excellent in volume feeling and handling feeling, and can be used as a synthetic leather as it is or may be adhered to other substrate to be used as a synthetic leather. The film thickness of the wet type film is preferably from 50 µm to 50 mm, more preferably from 1 mm to 3 mm. In order to obtain a sufficient film thickness, it is particularly preferable to use a foaming agent.

According to the dry type method, it is possible to form a polyurethane resin film on a substrate by directly coating and impregnating a polyurethane resin solution onto a substrate and coagulating the polyurethane resin.

Also, it is possible to obtain a polyurethane resin film by using a substrate having releasability such as a release paper, coating a polyurethane resin solution, coagulating the polyurethane resin and then releasing the substrate having releasability. The polyurethane resin film thus obtained can be produced into a synthetic leather by being adhered to a fibrous substrate, a fibrous substrate having a synthetic resin layer formed thereon or a synthetic resin film substrate by using an adhesive. Further, by applying a design on a substrate having releasability, a polyurethane resin film having the design transferred thereto can be obtained. The polyurethane resin film thus produced is excellent in strength and also excellent in handling feeling. The film thickness of the dry type film is preferably from 25 µm to 500 µm, more preferably from 50 µm to 200 µm.

In the present invention, in order to satisfy various properties required for a film-form polyurethane resin, additives such as a dye, a pigment, a bulking agent, fine powdered silica, a stabilizer, a foaming agent or the like may optionally be used.

### EXAMPLES

Hereinafter, the present invention is further illustrated with reference to Examples and Comparative Examples. The term "part" used herein is "part by weight".

### STARTING MATERIALS

As polyols, the following polyoxyalkylene polyols (polyols (B1) to (B3), and (G1) to (G5)) and polyols (A1) to (A3) were used.

The polyol (B1) was prepared by reacting propylene oxide (hereinafter referred to as PO) in an amount of 18% to the finally formed polyol by using polyoxypropylene diol having a molecular weight of 700 as an initiator and using a zinc hexacyanocobaltate complex catalyst, then reacting a mixture of ethylene oxide (hereinafter referred to as EO) and PO, and then reacting EO by using a KOH catalyst.

Polyols (B2) and (B3) were prepared by reacting a mixture of PO and EO by using polyoxypropylene diol having a molecular weight of 700 as an initiator and using a zinc hexacyanocobaltate complex catalyst, and then reacting EO by using a KOH catalyst.

Polyol (G1) was prepared by reacting PO by using propylene glycol as an initiator and using a KOH catalyst, and then reacting EO.

Polyol (G2) was prepared by reacting PO by using polyoxypropylene diol having a molecular weight of 700 as an initiator and using a zinc hexacyanocobaltate complex catalyst.

Polyol (G3) was prepared by reacting a mixture of EO and PO by using polyoxypropylene diol having a molecular weight of 700 as an initiator and using a zinc hexacyanocobaltate complex catalyst.

Polyol (G4) was prepared by reacting PO by using polyoxypropylene diol having a molecular weight of 700 as an initiator and using a zinc hexacyanocobaltate complex catalyst, and then reacting EO by using a KOH catalyst.

Polyol (G5) was prepared by reacting PO by using glycerin as an initiator and using a KOH catalyst.

Table 1 illustrates the structure of the above polyoxyalkylene polyols (hydroxyl group number, inside oxyethylene group content (inside EO group content), terminal oxyethylene chain content (terminal EO group content), total oxyethylene group content (total EO content), hydroxyl value, and total unsaturation degree). The oxyethylene group content is a proportion to the total polyoxyalkylene polyol.

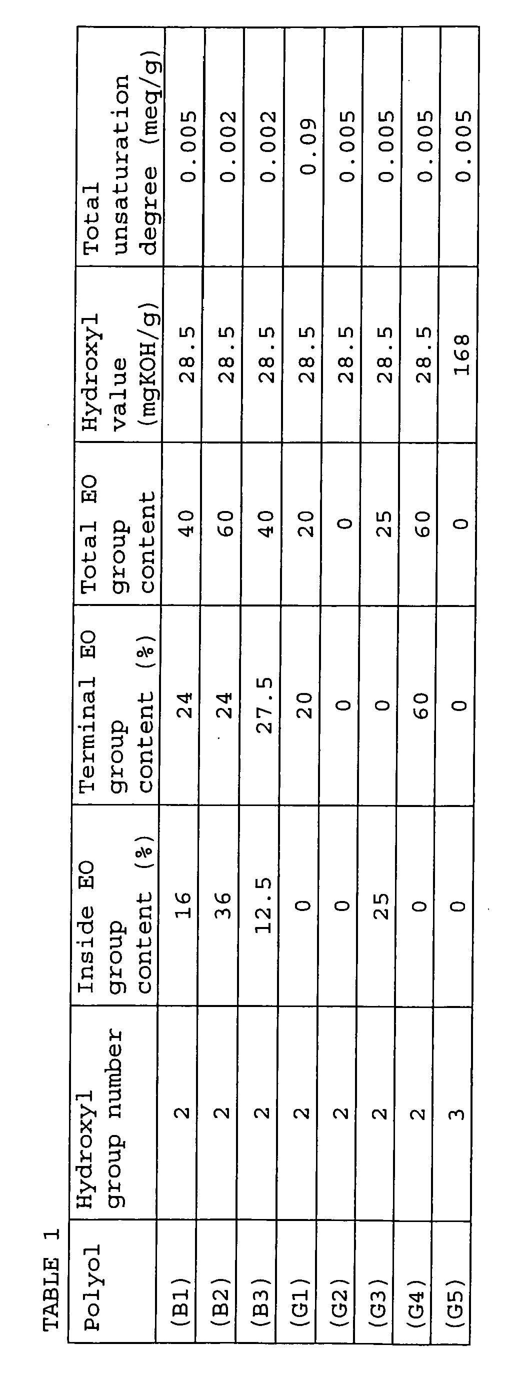

Polyol (A1): Polycarbonate diol having a number average molecular weight of 2,000 obtained by reacting 1,6-hexamethylene diol and dialkyl carbonate. Tradename "NIPPOLLAN 980" manufactured by NIPPON POLYURETHANE INDUSTRY CO., LTD.

Polyol (A2): Polyester polyol having a number average molecular weight of 2,000 obtained by reacting 1,4-butanediol and adipic acid. Tradename "OD-X-668" manufactured by Dainippon Ink and Chemicals, Incorporated.

Polyol (A3): Polyoxytetramethylene diol having a number average molecular weight of 2,000. Tradename "PTG-2000SN" manufactured by Hodogaya Chemical Co., Ltd.

### PRODUCTION EXAMPLE 1

Into a reaction container having a volume of 1 liter, were charged 41.3 parts of polyol (B1), 0.42 part of polyol (G5), 62.7 parts of polyol (A1), 9.4 parts of 1,4-butanediol (1,4-BD) and dibutyltin dilaurate (DBTDL) in an amount of 50 ppm to the finally formed polyurethane resin. Diphenylmethane diisocyanate (p-MDI, "Millionate MT" manufactured by NIPPON POLYURETHANE INDUSTRY CO., LTD.) was added thereto in an amount of about 0.9 of isocyanate group/hydroxyl group (equivalent ratio), and 450 parts of dimethylformamide (DMF) was then added thereto. Further, p-MDI was added. The total added amount of p-MDI was 37.3 parts (corresponding to about 1.02 of isocyanate group/hydroxyl group (equivalent ratio)). The resultant mixture was reacted at 50 to 90°C for 8 hours in nitrogen atmosphere to obtain polyurethane solution 1.

### PRODUCTION EXAMPLES 2 TO 14

Polyurethane solutions 2 to 14 were obtained in the same manner as in Production Example 1, except that such polyols as illustrated in the following Tables 2 and 3 were employed, the kinds and the amounts of which are illustrated in Tables 2 and 3.

### EXAMPLES 1 TO 6 AND COMPARATIVE EXAMPLES 1 TO 8 PRODUCTION EXAMPLES OF "DRY TYPE FILM"

Each of the above obtained polyurethane solutions 1 to 14 was coated on a glass plate in such a manner as to provide a thickness of 500 µm by using an applicator, and was dried at 80°C for one night to obtain a dry type film of about 120 µm. The films thus obtained were measured in respect of 100% modulus (M₁₀₀), 300% modulus (M₃₀₀), breaking strength, tearing strength, breaking extension and glass transition point (Tg), the results of which are shown in the following Tables 4 to 5.

Also, each of the dry type films thus obtained was (1) heated at 120°C for one week ("heat resistance (after one week)" in the Table), (2) heated at 120°C for two weeks ("heat resistance (after two weeks)" in the Table), and (3) dipped in 10% sodium hydroxide aqueous solution for 24 hours ("alkali resistance" in the Table) to measure a breaking strength for calculating retention of breaking strength. The results are shown in the following Table 6.

### EXAMPLES 7 TO 12 AND COMPARATIVE EXAMPLES 9 TO 16 PRODUCTION EXAMPLES OF "WET TYPE FILM"

3 parts of a foaming agent ("CRISVON ASSISTOR SD-7" manufactured by Dainippon Ink and Chemicals, Incorporated) was added to the above obtained polyurethane solution 1, and the resultant mixture was coated on a non-woven cloth (tradename "ecule" of a thickness of about 0.25 mm, manufactured by Toyobo Co., Ltd.) in such a manner as to provide a film thickness of 1 mm by using an applicator, thereby having the polyurethane resin solution impregnated into the non-woven cloth. The substrate thus obtained by having the polyurethane resin solution coated and impregnated therein was dipped in a tank containing water as a coagulating solution. After having DMF on the substrate eluted in the coagulating solution and coagulating the polyurethane resin, the substrate was taken out and was placed in a washing tank containing water to completely remove DMF on the substrate. The substrate thus obtained was dried in an oven at 80°C for 1 hour. Thus, a wet type film laminated on the non-woven cloth was obtained. The wet type film thus obtained had a thickness of about 2 mm, and had a sufficient thickness and a volume feeling.

Wet type films were obtained in the same manner as above by using respective polyurethane solutions 2 to 14. The wet type films and laminates of non-woven cloth were evaluated in respect of a handling feeling and a volume feeling. The evaluation method is illustrated below.

Handling feeling: ○ means "soft and flexible", Δ means flexible but somewhat hard, and × means hard and poor in softness and flexibility.

Volume feeling: ○ means "sufficient thickness and satisfactory volume feeling", and × means "insufficient thickness and poor volume feeling".

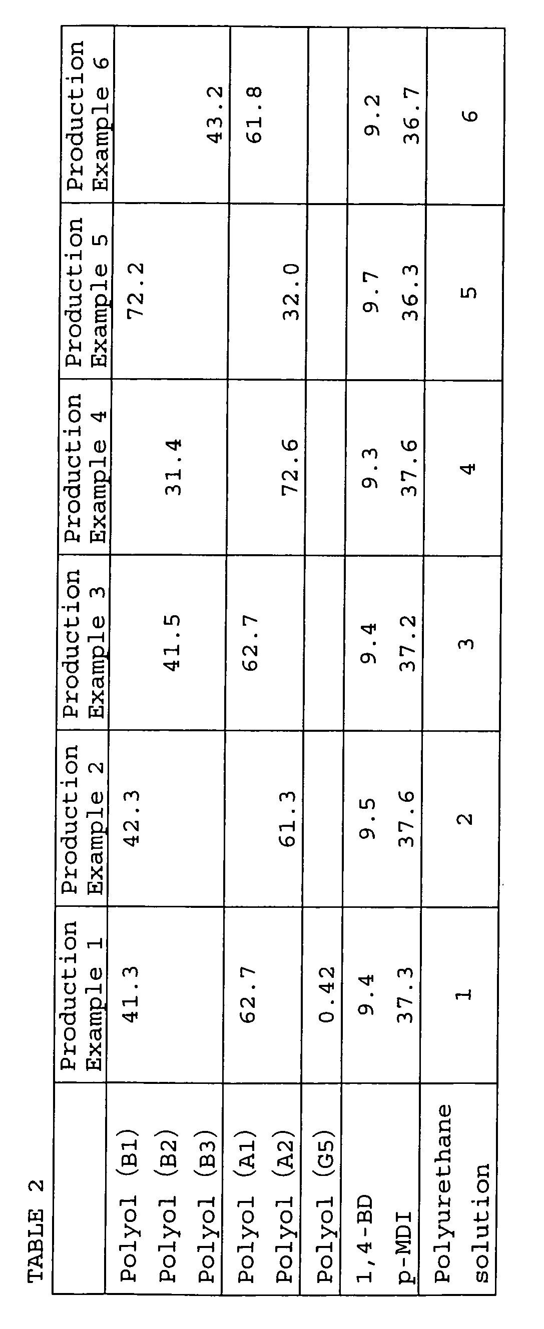

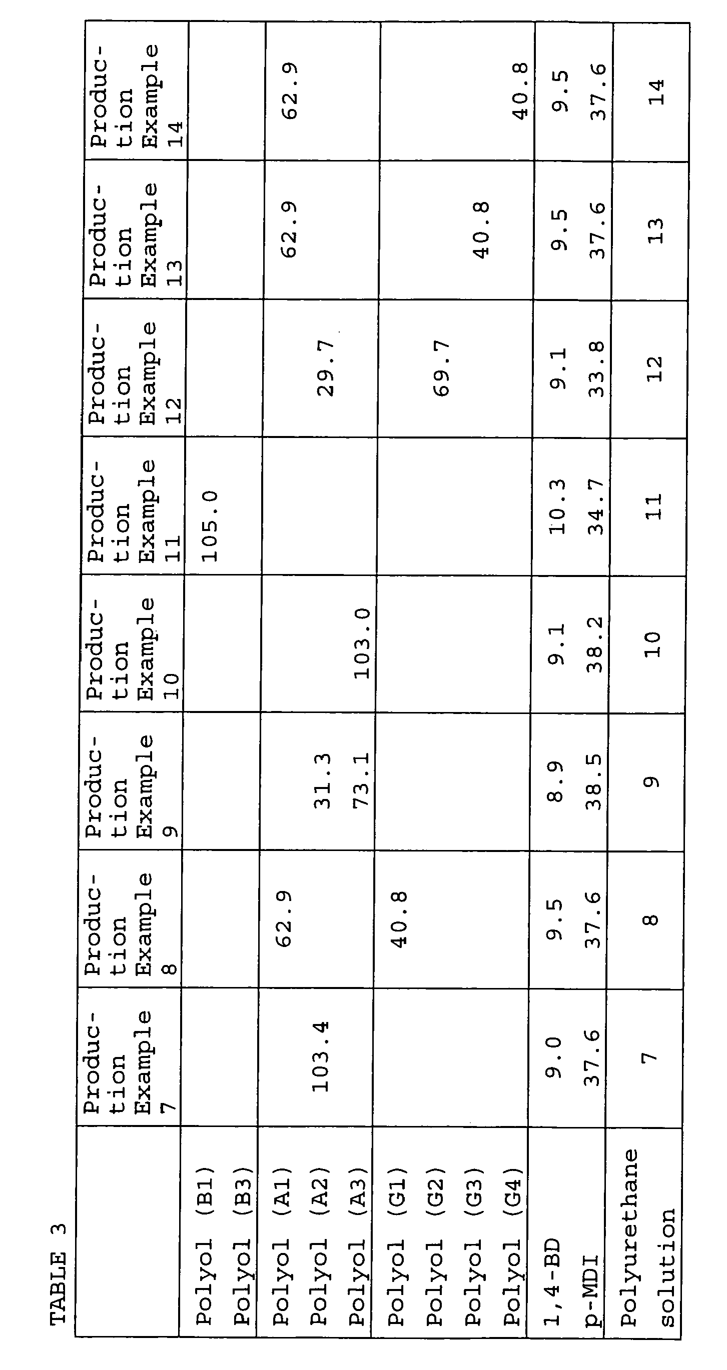

**TABLE 4**

| | Ex. 1 | Ex. 2 | Ex. 3 | Ex. 4 | Ex. 5 | Ex. 6 |
|---|---|---|---|---|---|---|
| M₁₀₀ (MPa) | 3.87 | 3.79 | 3.07 | 3.24 | 2.92 | 3.74 |
| M₃₀₀ (MPa) | 11.20 | 8.36 | 8.47 | 8.24 | 6.33 | 11.30 |
| Breaking strength (MPa) | 67.5 | 37.4 | 56.9 | 48.9 | 37.2 | 64.7 |
| Tearing strength (kN/m) | 53.5 | 67.2 | 39.6 | 62.5 | 55.2 | 51.4 |
| Breaking extension (%) | 566 | 740 | 535 | 670 | 868 | 515 |
| T_{g} (°C) | -25.7 | -35.5 | -19.0 | -33.8 | -39.6 | -18.8 |

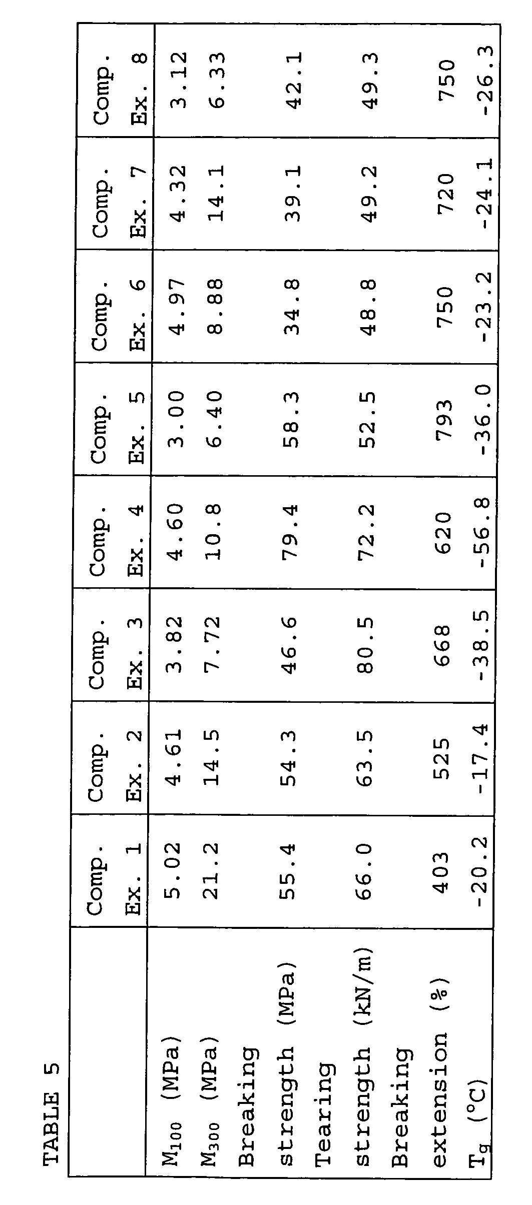

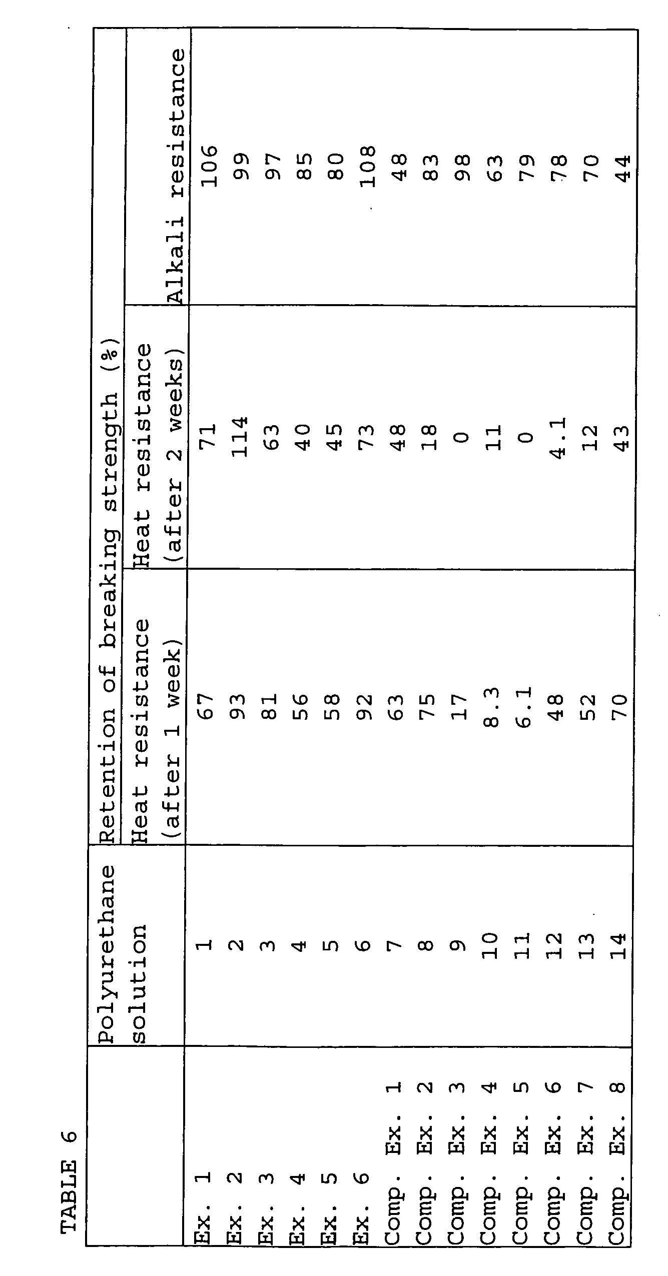

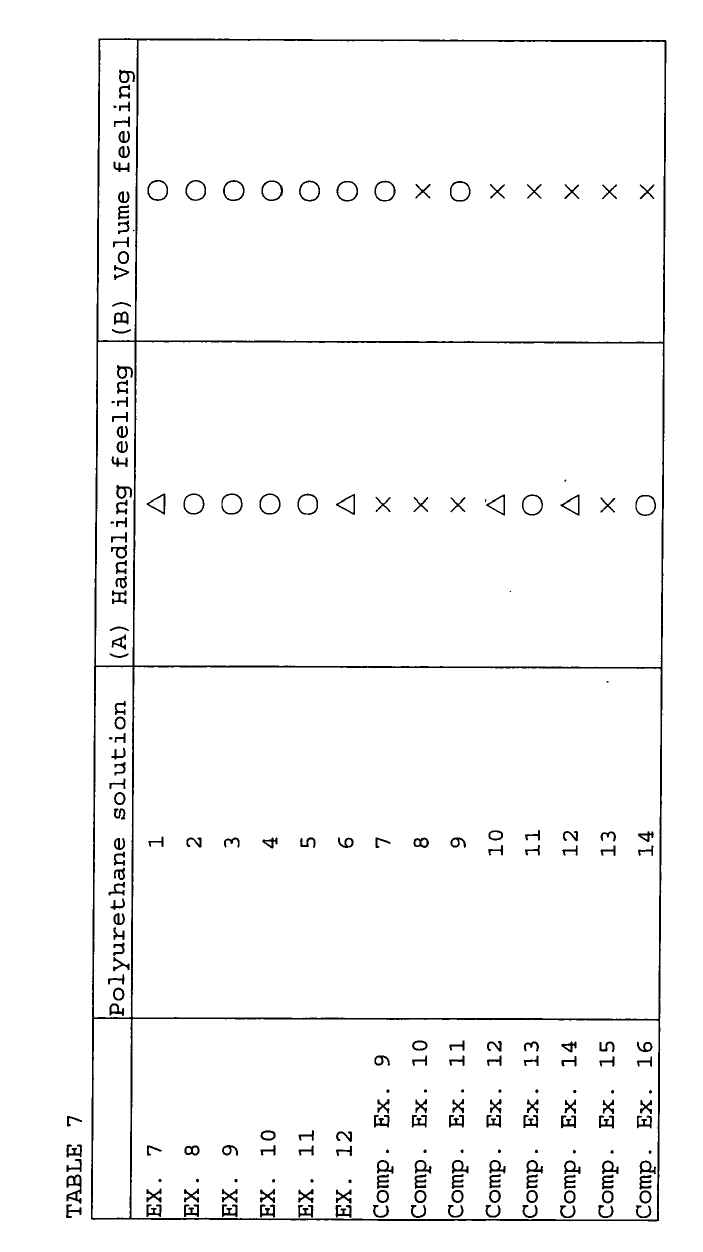

The polyurethane resin films obtained in the above Examples were excellent in heat resistance and water resistance. Also, particularly the films produced by the wet type method had a sufficient film thickness and accordingly a satisfactory volume feeling, thereby providing a synthetic leather excellent in handling feeling.

### INDUSTRIAL APPLICABILITY

According to the present invention, a polyurethane resin film having a satisfactory handling feeling and soft even at a low temperature can be obtained, which is particularly suitable as a synthetic leather material. Further, the present invention is applicable also as a fiber-treating agent, a resin for paint, an adhesive, a binder, a coating agent and the like. Further, it can be formed into a film to be used as a laminate material, can be formed into a plate-like material to be used as a synthetic wood material, and also can be used as a wet type film for a filter film. Still further, it can be subjected to wet type or dry type spinning to produce a fabric like a natural fabric having an excellent moisture-absorptivity and a satisfactory soft handling feeling.

## Claims

1. A process for producing a polyurethane resin **characterized by** reacting at least one polyol (A) selected from the group consisting of polycarbonate polyol, polyester polyol and polyoxytetramethylene polyol, a polyoxyalkylene polyol (B) having a total oxyethylene group content of from 30 to 80 mass%, which has from 10 to 50 mass% of oxyethylene groups (inside oxyethylene groups) in the inside of its molecule and from 10 to 50 mass% of oxyethylene block chains (terminal oxyethylene chains) at the terminals of its molecule, and a polyisocyanate (C).

2. A process for producing a film-form polyurethane resin **characterized by** reacting, in an inert organic solvent, at least one polyol (A) selected from the group consisting of polycarbonate polyol, polyester polyol and polyoxytetramethylene polyol, a polyoxyalkylene polyol (B) having a total oxyethylene group-content of from 30 to 80 mass%, which has from 10 to 50 mass% of oxyethylene groups (inside oxyethylene groups) in the inside of its molecule and from 10 to 50 mass% of oxyethylene block chains (terminal oxyethylene chains) at the terminals of its molecule, and a polyisocyanate (C), to obtain a solution of a polyurethane resin, then coating the obtained solution of the polyurethane resin on a substrate, and then, removing the solvent.

3. The process according to Claim 1 or 2, wherein a chain extender (D) is reacted with the polyisocyanate, together with the polyol (A) and the polyoxyalkylene polyol (B).

4. The process according to Claim 1, 2 or 3, wherein the polyoxyalkylene polyol (B) has 2 or 3 hydroxyl groups and a total unsaturation degree of at most 0.015 meq/g.

5. The process according to any one of Claims 1 to 4, wherein the inside oxyethylene groups in the polyoxyalkylene polyol (B) are oxyethylene groups in random polymer chains obtained by ring opening addition polymerization of a mixture of ethylene oxide with other alkylene oxides.

6. The process according to any one of Claims 1 to 5, wherein the polyoxyalkylene polyol (B) is a polyoxyalkylene polyol obtained by subjecting propylene oxide to ring opening addition polymerization in the presence of a composite metal cyanide complex catalyst and an initiator, then subjecting a mixture of ethylene oxide and propylene oxide to ring opening addition polymerization, and then subjecting ethylene oxide to ring opening addition polymerization in the presence of an alkali catalyst.

7. The process according to any one of Claims 1 to 5, wherein the polyoxyalkylene polyol (B) is a polyoxyalkylene polyol obtained by subjecting a mixture of ethylene oxide and propylene oxide to ring opening addition polymerization in the presence of a composite metal cyanide complex catalyst and an initiator, then subjecting ethylene oxide to ring opening addition polymerization in the presence of an alkali catalyst.

8. A polyurethane resin obtained by reacting at least one polyol (A) selected from the group consisting of polycarbonate polyol, polyester polyol and polyoxytetramethylene polyol, a polyoxyalkylene polyol (B) having a total oxyethylene group content of from 30 to 80 mass%, which has from 10 to 50 mass% of oxyethylene groups (inside oxyethylene groups) in the inside of its molecule and from 10 to 50 mass% of oxyethylene block chains (terminal oxyethylene chains) at the terminals of its molecule, and a polyisocyanate (C).

9. The polyurethane resin according to Claim 8, wherein the polyurethane resin is a polyurethane resin obtained by reacting a chain extender (D) with a polyisocyanate (C), together with the polyol (A) and the polyoxyalkylene polyol (B).

10. The polyurethane resin according to Claim 8 or 9, which is laminated on a substrate in a film form.

11. The polyurethane resin according to Claim 8, 9 or 10, which is used for an application to synthetic leathers.
